# EUROPEAN PATENT APPLICATION

(11) **EP 1 130 498 A2**
(43) Date of publication of application: **05.09.2001**
(21) Application number: 01300038.5
(22) Date of filing: 04.01.2001
(51) Int. Cl.: G06F 1/00

(54) **Data transmission system with authentication devices**

(30) Priority: 14.02.2000 JP 2000079112; 02.03.2000 JP 2000057785
(71) Applicant: Victor Company of Japan, Ltd., Yokohama 221-0022 (JP)
(72) Inventor: Ichinoi, Yutaka, Yokohama-shi, Kanagawa-ken (JP); Ohishi, Takeo, Yokohama-shi, Kanagawa-ken (JP)
(74) Representative: Dempster, Benjamin John Naftel

(57) **Abstract**

A contents-information transmission system includes a contents-information handling apparatus to which one of different levels of at least one of copyright protection and information secrecy is assigned. The system also includes an authentication apparatus. The one of the different levels is transmitted from the contents-information handling apparatus to the authentication apparatus. In the authentication apparatus, a device operates for comparing the transmitted one of the different levels with a predetermined reference level. Transmission of contents information from the authentication apparatus to the contents-information handling apparatus is selectively permitted and inhibited in response to a result of the comparison.

## Description

This invention relates to a contents-information transmission system. Also, this invention relates to an authentication apparatus. In addition, this invention relates to a contents-information handling apparatus. Furthermore, this invention relates to a method of data transmission. Also, this invention relates to a transmission medium. In addition, this invention relates to a reliability deciding apparatus. Furthermore, this invention relates to a reliability decided apparatus. Also, this invention relates to a recording medium.

Japanese published unexamined patent application 10-304333 (application number 10-043111) discloses a data transmission system having a sender apparatus and a receiver apparatus. The sender apparatus stores main data, challenge data, data of a decryption algorithm, and data of a verification key. The receiver apparatus stores data of an encryption algorithm and data of a certificate key. In the case where the sender apparatus is required to transmit main data to the receiver apparatus, authentication is implemented as follows. Firstly, the sender apparatus transmits the challenge data to the receiver apparatus. The receiver apparatus encrypts the challenge data in response to the certificate-key data according to the encryption algorithm. The receiver apparatus returns the encryption-resultant challenge data to the sender apparatus as response data. The sender apparatus decrypts the encryption-resultant challenge data in response to the verification-key data according to the decryption algorithm. The sender apparatus compares the decryption-resultant challenge data with the original challenge data. When the decryption-resultant challenge data are the same as the original challenge data, the sender apparatus decides that the receiver apparatus is legitimate regarding the copyright of the main data. Otherwise, the sender apparatus decides that the receiver apparatus is illegal. Only in the case where the receiver apparatus is decided to be legitimate, the sender apparatus transmits the main data thereto.

Japanese application 10-304333 also discloses a data transmission system in which a receiver apparatus feeds information of its own model to a sender apparatus, and the sender apparatus feeds information of its own model to the receiver apparatus. The sender apparatus determines an authentication method in response to the model information from the receiver apparatus. The sender apparatus generates challenge data in the determined authentication method. The sender apparatus transmits the challenge data to the receiver apparatus. The receiver apparatus determines a certificate method in response to the model information from the sender apparatus. The receiver apparatus processes the challenge data into response data according to the determined certificate method. The receiver apparatus transmits the response data to the sender apparatus. The sender apparatus authenticates the response data.

The systems of Japanese application 10-304333 are unable to change the degree of copyright protection for main data or contents information. In some cases, it is desirable to change copyright protection for contents information among a plurality of different levels to provide fine control thereof. In the systems of Japanese application 10-304333, a receiver apparatus having certificate-key data resulting from illegally copying true data can accept main data from a sender apparatus. It is desirable to prevent main data (contents information) from being transmitted to such an illegal receiver apparatus.

It is a first object of this invention to provide an improved contents-information transmission system.

It is a second object of this invention to provide an improved authentication apparatus.

It is a third object of this invention to provide an improved contents-information handling apparatus.

It is a fourth object of this invention to provide an improved method of data transmission.

It is a fifth object of this invention to provide an improved transmission medium.

It is a sixth object of this invention to provide an improved reliability deciding apparatus.

It is a seventh object of this invention to provide an improved reliability decided apparatus.

It is an eighth object of this invention to provide an improved recording medium.

A first aspect of this invention provides a contents-information transmission system comprising a contents-information handling apparatus to which one of different levels of at least one of copyright protection and information secrecy is assigned; an authentication apparatus; means for transmitting said one of the different levels from the contents-information handling apparatus to the authentication apparatus; means provided in the authentication apparatus for comparing said transmitted one of the different levels with a predetermined reference level; and means for selectively permitting and inhibiting transmission of contents information from the authentication apparatus to the contents-information handling apparatus in response to a result of said comparing.

A second aspect of this invention provides an authentication apparatus connectable with a contents-information handling apparatus to which one of different levels of at least one of copyright protection and information secrecy is assigned. The authentication apparatus comprises means for receiving said one of the different levels from the contents-information handling apparatus; means for comparing said received one of the different levels with a predetermined reference level; and means for selectively permitting and inhibiting transmission of contents information to the contents-information handling apparatus in response to a result of said comparing.

A third aspect of this invention is based on the second aspect thereof, and provides an authentication apparatus wherein said one of the different levels is represented by copyrighted data.

A fourth aspect of this invention provides a contents-information handling apparatus in a contents-information transmission system. The system comprises a contents-information handling apparatus to which one of different levels of at least one of copyright protection and information secrecy is assigned, and an authentication apparatus connectable with the contents-information handling apparatus. The authentication apparatus decides a level of the contents-information handling apparatus which relates to at least one of copyright protection and information secrecy. The authentication apparatus selectively permits and inhibits transmission of contents information to the contents-information handling apparatus in response to said decided level. The contents-information handling apparatus comprises means for storing data representative of said one of the different levels; and means for transmitting the data representative of said one of the different levels to the authentication apparatus.

A fifth aspect of this invention is based on the fourth aspect thereof, and provides a contents-information handling apparatus wherein said data comprise copyrighted data.

A sixth aspect of this invention provides a method of data transmission between an authentication apparatus and a contents-information handling apparatus to which one of different levels of at least one of copyright protection and information secrecy is assigned. The method comprises the steps of transmitting said one of the different levels from the contents-information handling apparatus to the authentication apparatus; comparing said transmitted one of the different levels with a predetermined reference level; and selectively permitting and inhibiting transmission of contents information from the authentication apparatus to the contents-information handling apparatus in response to a result of said comparing.

A seventh aspect of this invention is based on the sixth aspect thereof, and provides a method wherein said one of the different levels is represented by copyrighted data.

An eighth aspect of this invention is based on the sixth aspect thereof, and provides a method further comprising the steps of transmitting predetermined data from the authentication apparatus to the contents-information handling apparatus; and transmitting said one of the different levels from the contents-information handling apparatus to the authentication apparatus in response to the predetermined data received by the contents-information handling apparatus.

A ninth aspect of this invention provides a transmission medium in a contents-information transmission system. The system comprises a contents-information handling apparatus to which one of different levels of at least one of copyright protection and information secrecy is assigned, and an authentication apparatus deciding a level of the contents-information handling apparatus which relates to at least one of copyright protection and information secrecy. The authentication apparatus selectively permits and inhibits transmission of contents information to the contents-information handling apparatus in response to said decided level. The transmission medium comprises means for connecting the contents-information handling apparatus and the authentication apparatus with each other; means for enabling said one of the different levels to be transmitted from the contents-information handling apparatus to the authentication apparatus; and means for enabling the contents information to be transmitted from the authentication apparatus to the contents-information handling apparatus.

A tenth aspect of this invention provides a contents-information transmission system comprising a contents-information handling apparatus having a capability regarding at least one of copyright protection and information secrecy; an authentication apparatus; means for transmitting data representative of said capability from the contents-information handling apparatus to the authentication apparatus, the data containing first contents information which is copyrighted; means provided in the authentication apparatus for judging the data transmitted from the contents-information handling apparatus; and means for selectively permitting and inhibiting transmission of second contents information from the authentication apparatus to the contents-information handling apparatus in response to a result of said judging.

An eleventh aspect of this invention provides an authentication apparatus connectable with a contents-information handling apparatus having a capability regarding at least one of copyright protection and information secrecy. The authentication apparatus comprises means for receiving data representative of said capability from the contents-information handling apparatus, the data containing first contents information which is copyrighted; means for judging the received data; and means for selectively permitting and inhibiting transmission of second contents information to the contents-information handling apparatus in response to a result of said judging.

A twelfth aspect of this invention provides a contents-information handling apparatus in a contents-information transmission system. The system comprises the contents-information handling apparatus having a capability regarding at least one of copyright protection and information secrecy, and an authentication apparatus connectable with the contents-information handling apparatus. The authentication apparatus decides whether or not the contents-information handling apparatus has a capability regarding at least one of copyright protection and information secrecy. The authentication apparatus selectively permits and inhibits transmission of first contents information to the contents-information handling apparatus in response to a result of said deciding. The contents-information handling apparatus comprises means for storing data representative of said capability of the contents-information handling apparatus, the data containing second contents information which is copyrighted; and means for transmitting the data to the authentication apparatus.

A thirteenth aspect of this invention provides a method of data transmission between an authentication apparatus and a contents-information handling apparatus having a capability regarding at least one of copyright protection and information secrecy. The method comprises the steps of transmitting data representative of said capability from the contents-information handling apparatus to the authentication apparatus, the data containing first contents information which is copyrighted; judging the data transmitted from the contents-information handling apparatus; and selectively permitting and inhibiting transmission of second contents information from the authentication apparatus to the contents-information handling apparatus in response to a result of said judging.

A fourteenth aspect of this invention is based on the thirteenth aspect thereof, and provides a method further comprising the steps of transmitting predetermined data from the authentication apparatus to the contents-information handling apparatus; and transmitting the data representative of the capability from the contents-information handling apparatus to the authentication apparatus in response to the predetermined data received by the contents-information handling apparatus.

A fifteenth aspect of this invention provides a transmission medium in a contents-information transmission system. The system comprises a contents-information handling apparatus having a capability regarding at least one of copyright protection and information secrecy, and an authentication apparatus deciding whether or not the contents-information handling apparatus has a capability regarding at least one of copyright protection and information secrecy. The authentication apparatus selectively permits and inhibits transmission of first contents information to the contents-information handling apparatus in response to a result of said deciding. The transmission medium comprises means for connecting the contents-information handling apparatus and the authentication apparatus with each other; means for enabling data representative of the capability of the contents-information handling apparatus to be transmitted to the authentication apparatus, the data containing second contents information which is copyrighted; and means for enabling the first contents information to be transmitted from the authentication apparatus to the contents-information handling apparatus.

A sixteenth aspect of this invention provides a reliability deciding apparatus for deciding a reliability of an object apparatus to which one of different reliabilities regarding information secrecy is assigned. The reliability deciding apparatus comprises means for transmitting predetermined data to the object apparatus; means for receiving response data from the object apparatus as a reply to the transmission of the predetermined data; means for storing information representing a plurality of public keys corresponding to the different reliabilities respectively; means for selecting one from among the public keys and decrypting the response data into a decryption-resultant data in accordance with the selected public key; means for deciding whether or not the predetermined data and the decryption-resultant data are equal to each other; and means for, when it is decided that the predetermined data and the decryption-resultant data are equal to each other, deciding that a reliability of the object apparatus is equal to one of the different reliabilities which corresponds to the selected public key.

A seventeenth aspect of this invention provides a reliability decided apparatus to which one of different reliabilities regarding information secrecy is assigned. A reliability of the reliability decided apparatus is decided by a reliability deciding apparatus. The reliability decided apparatus comprises means for receiving predetermined data from the reliability deciding apparatus; means for storing information of a secret key corresponding to specified one of the different reliabilities; means for encrypting the predetermined data into encryption-resultant data in response to the secret key; and means for transmitting the encryption-resultant data to the reliability deciding apparatus.

An eighteenth aspect of this invention provides a reliability deciding apparatus for deciding a reliability of an object apparatus to which one of different reliabilities regarding information secrecy is assigned. The reliability deciding apparatus comprises means for transmitting predetermined data to the object apparatus; means for receiving response data from the object apparatus as a reply to the transmission of the predetermined data, the response data containing a data piece peculiar to the object apparatus; means for storing a plurality of reference data pieces corresponding to the different reliabilities respectively; means for extracting the peculiar data piece from the response data; means for selecting one from among the reference data pieces and deciding whether or not the selected reference data piece and the extracted peculiar data piece are equal to each other; and means for, when it is decided that the selected reference data piece and the extracted peculiar data piece are equal to each other, deciding that a reliability of the object apparatus is equal to one of the different reliabilities which corresponds to the selected reference data piece.

An nineteenth aspect of this invention provides a reliability decided apparatus to which one of different reliabilities regarding information secrecy is assigned. A reliability of the reliability decided apparatus is decided by a reliability deciding apparatus. The reliability decided apparatus comprises means for receiving predetermined data from the reliability deciding apparatus; means for storing a data piece which is peculiar to the reliability decided apparatus, and which corresponds to specified one of the different reliabilities; means for encrypting the predetermined data into encryption-resultant data in response to the data piece; and means for transmitting the encryption-resultant data to the reliability deciding apparatus.

A twentieth aspect of this invention provides a reliability deciding apparatus for deciding a reliability of an object apparatus to which one of different reliabilities regarding information secrecy is assigned. The reliability deciding apparatus comprises means for transmitting predetermined data to the object apparatus; means for receiving response data from the object apparatus as a reply to the transmission of the predetermined data, the response data containing a data piece peculiar to the object apparatus; means for decrypting the response data into decryption-resultant data; means for extracting the peculiar data piece from the decryption-resultant data; means for executing predetermined calculation between the extracted peculiar data piece and the predetermined data to generate a calculation-resultant data piece; means for compressing the calculation-resultant data piece into a compression-resultant data piece according to a predetermined function; means for storing a plurality of reference data pieces corresponding to the different reliabilities respectively; means for processing the reference data pieces into respective processing-resultant data pieces according to the predetermined function; means for selecting one from among the processing-resultant data pieces and deciding whether or not the selected processing-resultant data piece and the compression-resultant data piece are equal to each other; and means for, when it is decided that the selected processing-resultant data piece and the compression-resultant data piece are equal to each other, deciding that a reliability of the object apparatus is equal to one of the different reliabilities which corresponds to the selected processing-resultant data piece.

A twenty-first aspect of this invention provides a reliability decided apparatus to which one of different reliabilities regarding information secrecy is assigned. A reliability of the reliability decided apparatus is decided by a reliability deciding apparatus. The reliability decided apparatus comprises means for receiving predetermined data from the reliability deciding apparatus; means for storing a peculiar data piece which is peculiar to the reliability decided apparatus, and which corresponds to specified one of the different reliabilities; means for encrypting the predetermined data into encryption-resultant data in response to the peculiar data piece; means for compressing the peculiar data piece into a compression-resultant data piece according to a predetermined function; means for combining the encryption-resultant data and the compression-resultant data piece into response data; and means for transmitting the response data to the reliability deciding apparatus.

A twenty-second aspect of this invention provides a recording medium storing a computer program for controlling an authentication apparatus connectable with a contents-information handling apparatus to which one of different levels of at least one of copyright protection and information secrecy is assigned. The computer program comprises the steps of receiving said one of the different levels from the contents-information handling apparatus; comparing said received one of the different levels with a predetermined reference level; and selectively permitting and inhibiting transmission of contents information to the contents-information handling apparatus in response to a result of said comparing.

A twenty-third aspect of this invention provides a recording medium in a contents-information transmission system comprising a contents-information handling apparatus to which one of different levels of at least one of copyright protection and information secrecy is assigned, and an authentication apparatus connectable with the contents-information handling apparatus. The authentication apparatus decides a level of the contents-information handling apparatus which relates to at least one of copyright protection and information secrecy. The authentication apparatus selectively permits and inhibits transmission of contents information to the contents-information handling apparatus in response to said decided level. The recording medium stores a computer program for controlling the contents-information handling apparatus. The computer program comprises the step of transmitting data representative of said one of the different levels to the authentication apparatus.

A twenty-fourth aspect of this invention provides a recording medium storing a computer program for controlling an authentication apparatus connectable with a contents-information handling apparatus having a capability regarding at least one of copyright protection and information secrecy. The computer program comprises the steps of receiving data representative of said capability from the contents-information handling apparatus, the data containing first contents information which is copyrighted; judging the received data; and selectively permitting and inhibiting transmission of second contents information to the contents-information handling apparatus in response to a result of said judging.

A twenty-fifth aspect of this invention provides a recording medium in a contents-information transmission system comprising a contents-information handling apparatus having a capability regarding at least one of copyright protection and information secrecy, and an authentication apparatus connectable with the contents-information handling apparatus. The authentication apparatus decides whether or not the contents-information handling apparatus has a capability regarding at least one of copyright protection and information secrecy. The authentication apparatus selectively permits and inhibits transmission of first contents information to the contents-information handling apparatus in response to a result of said deciding. The recording medium stores a computer program for controlling the contents-information handling apparatus. The computer program comprises the step of transmitting data representative of said capability of the contents-information handling apparatus to the authentication apparatus, the data containing second contents information which is copyrighted.

Fig. 1 is a block diagram of a contents-information transmission system according to a first embodiment of this invention.

Fig. 2 is a flowchart of a segment of a control program for a processing unit in a sender apparatus in Fig. 1.

Fig. 3 is a flowchart of a segment of a control program for a processing unit in a receiver apparatus in Fig. 1.

Fig. 4 is a flowchart of a segment of a control program for a processing unit in a sender apparatus in a second embodiment of this invention.

Fig. 5 is a flowchart of a segment of a control program for a processing unit in a receiver apparatus in the second embodiment of this invention.

Fig. 6 is a block diagram of a contents-information transmission system according to a third embodiment of this invention.

Fig. 7 is a signal-flow block diagram of a portion of the system in Fig. 6.

Fig. 8 is a signal-flow block diagram of another portion of the system in Fig. 6.

Fig. 9 is a signal-flow block diagram of a portion of a contents-information transmission system according to a fourth embodiment of this invention.

Fig. 10 is a signal-flow block diagram of a portion of a contents-information transmission system according to a fifth embodiment of this invention.

Fig. 11 is a block diagram of a contents-information transmission system according to an eleventh embodiment of this invention.

Fig. 12 is a block diagram of a contents-information transmission system according to a twelfth embodiment of this invention.

Fig. 13 is a block diagram of a contents-information transmission system according to a thirteenth embodiment of this invention.

Fig. 14 is a block diagram of a contents-information transmission system according to a fourteenth embodiment of this invention.

### First Embodiment

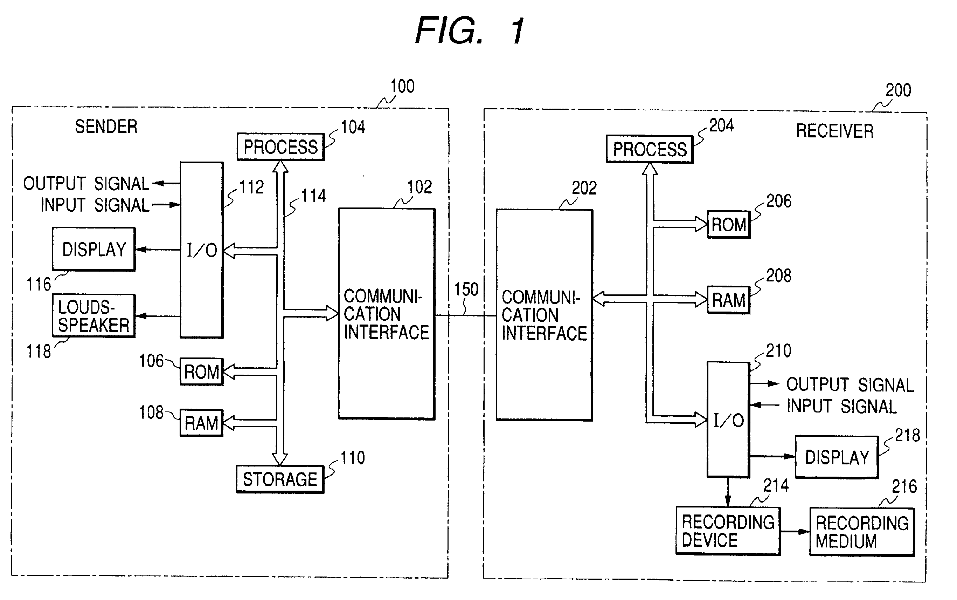

Fig. 1 shows a contents-information transmission system according to a first embodiment of this invention. The system of Fig. 1 includes a sender apparatus (an authentication apparatus) 100 and a receiver apparatus (a certificate apparatus) 200 which are connected to each other via a transmission medium 150. The transmission medium 150 includes, for example, an IEEE1394 transmission line, a local area network, a communication network, the Internet, or a wireless transmission line.

The sender apparatus 100 includes a communication interface 102, a processing unit (a CPU) 104, a ROM 106, a RAM 108, an interface-added storage device 110, and an input/output port 112 which are connected to each other via a bus 114 to form a signal processing system or a computer system. Challenge data are stored in the ROM 106 or the RAM 108. In general, the receiver apparatus 200 has one selected from among different-level reliabilities relating to at least one of copyright protection and information secrecy. Alternatively, the different-level reliabilities may mean different degrees of the legitimacy of the receiver apparatus 200, respectively. Data representing public keys corresponding to the respective different-level reliabilities are stored in the ROM 106 or the RAM 108. Specifically, the public keys correspond to reliability parameter values "1", "2", "3", ···, and "N", respectively. Here, N denotes a predetermined natural number equal to or greater than "2". Contents information (contents data) is stored in the storage device 110. The contents information can be fed to the storage device 110 from an external via the input/output port 112. Also, the contents information can be fed to the communication interface 102 from an external via the input/output port 112. The storage device 110 may be replaced by an interface-added contents-information reproducing device. The contents information includes header data having a signal representative of a designated reference reliability Lp assigned to the contents information. The communication interface 102 is connected to the transmission medium 150.

A display 116 and a loudspeaker 118 are connected to the input/output port 112. The display 116 and the loudspeaker 118 can be accessed by the processing unit 104 via the input/output port 112.

The receiver apparatus 200 includes a communication interface 202, a processing unit (a CPU) 204, a ROM 206, a RAM 208, and an input/output port 210 which are connected to each other via a bus 212 to form a signal processing system or a computer system. One among different-level reliabilities is previously assigned to the receiver apparatus 200 in accordance with its conditions relating to at least one of copyright protection and information secrecy. In other words, the receiver apparatus 200 has one selected from among different-level reliabilities relating to at least one of copyright protection and information secrecy. There are secret keys corresponding to the respective different-level reliabilities and mating or matching with the respective public keys in the receiver apparatus 200. Accordingly, there is a correspondence relation among the secret keys, the public keys, and the different-level reliabilities. One is previously selected from among the secret keys in accordance with the reliability of the receiver apparatus 200. Data representing the selected secret key are stored in the ROM 206 or the RAM 208. The selected secret key mates or matches with one of the public keys in the sender apparatus 100 which corresponds to the reliability of the receiver apparatus 200. The secret key used in the receiver apparatus 200 may be predetermined on the basis of a serial number of the receiver apparatus 200, identification information (ID information) of the receiver apparatus 200, or other information peculiar to the receiver apparatus 200. The communication interface 202 is connected to the transmission medium 150.

An example of conditions of the receiver apparatus 200 which correspond to the different-level reliabilities is as follows.
Level "1" (reliability parameter value "1"): Non-encrypted contents information can be transmitted from the receiver apparatus 200 via an external interface.
Level "2" (reliability parameter value "2"): Non-encrypted contents information can not be transmitted from the receiver apparatus 200 via an external interface. The non-encrypted contents information appears at an easily-accessed connector on a circuit board or an easily-accessed signal transmission line within the receiver apparatus 200. An access to the connector or the signal transmission line enables the non-encrypted contents information to be transmitted from the receiver apparatus 200 to an external.
Level "3" (reliability parameter value "3"): Non-encrypted contents information is absent from easily-accessed portions of a circuit board within the receiver apparatus 200. The non-encryption contents information is present only at portions of the circuit board which can be hardly accessed. For example, the non-encryption contents information is present only in wiring lines extending between BGA-package LSI's through inner layers of a printed circuit board.
Level "4" (reliability parameter value "4"): Non-encrypted contents information is present only in an interior of an LSI within the receiver apparatus 200. Only encryption-resultant contents information exists outside the LSI.

According to this example, the reliability relating to copyright protection or information secrecy increases as the level (the reliability parameter value) rises.

The reliability of the receiver apparatus 200 may be determined in the following way. The receiver apparatus 200 is classified into one of machine categories which correspond to a personal computer, a television receiver, a DV video cassette recorder, and a D-VHS video cassette recorder respectively. One of the different-level reliabilities is assigned to each of the machine categories. The reliability of the receiver apparatus 200 is determined in accordance with the machine category in which the receiver apparatus 200 is contained. The standards such as the DV standards or the D-VHS standards prescribe that a related apparatus should meet the conditions for designated one of the levels of the reliability regarding at least one of copyright protection and information secrecy. For example, the designated reliability level is equal to the level "4" (the reliability parameter value "4"). The licenser of the standards requires a licensee to design a produced apparatus to meet the conditions for the designated reliability level. Accordingly, it is possible to give guarantee that every apparatus conforming to the standards meets the conditions for the designated reliability level. When the receiver apparatus 200 is an apparatus conforming to the standards, the corresponding designated reliability level is given to the receiver apparatus 200. A specified organization or a specified company manages identification information (ID information) and peculiar information of apparatuses. The specified organization or the specified company provides the ID information and the peculiar information by which every apparatus is classified into one of the machine categories. Thus, the reliability of the receiver apparatus 200 can be determined by referring to the ID information and the peculiar information. Preferably, the level "1" (the reliability parameter value "1") is assigned to an apparatus not mentioned in the ID information and the peculiar information. Accordingly, when the receiver apparatus 200 is such an apparatus, the reliability thereof is set to the level "1" (the reliability parameter value "1").

A recording device 214 is connected to the input/output port 210. The recording device 214 acts to record signals, data, and information on a recording medium 216. The recording medium 216 is of a magnetic type, an optical type, a magneto-optical type, or a semiconductor type. A display 218 is connected to the input/output port 210. The recording device 214 and the display 218 can be accessed by the processing unit 204 via the input/output port 210.

Signals, data, and information can be transmitted between the communication interface 102 of the sender apparatus 100 and the communication interface 202 of the receiver apparatus 200 via the transmission medium 150.

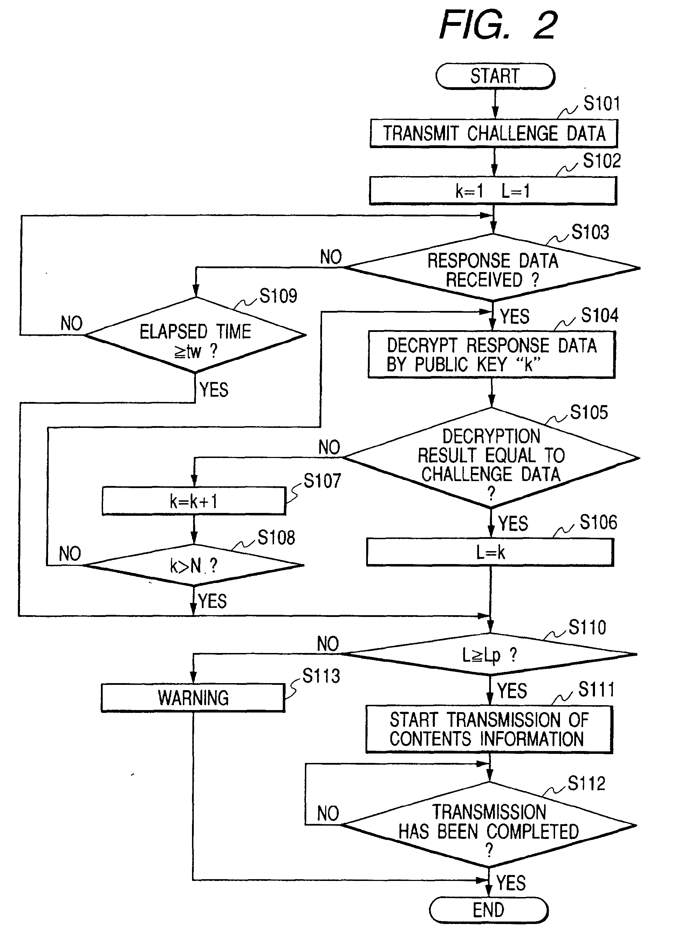

In the sender apparatus 100, the processing unit 104 operates in accordance with a control program stored in the ROM 106. The control program may be fed to the RAM 108 from an external via the input/output port 112. Fig. 2 is a flowchart of a segment of the control program for the processing unit 104. The program segment in Fig. 2 relates to authentication and contents-information transmission.

With reference to Fig. 2, a first step S101 of the program segment transfers the challenge data from the ROM 106 or the RAM 108 to the communication interface 102. The step S101 controls the communication interface 102 to transmit the challenge data to the transmission medium 150. The challenge data are propagated along the transmission medium 150 before reaching the communication interface 202 in the receiver apparatus 200.

The step S101 may encrypt the challenge data. In this case, the encryption-resultant challenge data are transmitted to the transmission medium 150.

A step S102 following the step S101 initializes a parameter value "k" to "1" (the lowest). In addition, the step S102 initializes a parameter value L to "1" (the lowest). The parameter value "k" indicates a reliability corresponding to a public key used for decrypting response data. The parameter value L indicates the reliability of the receiver apparatus 200 which is decided by the sender apparatus 100. After the step S102, the program advances to a step S103.

The step S103 accesses the communication interface 102, and decides whether or not response data have been received by the communication interface 102. The response data are transmitted from the receiver apparatus 200. When the response data have been received, the program advances from the step S103 to a step S104. Otherwise, the program advances from the step S103 to a step S109.

The step S109 decides whether or not a time elapsed since the moment of the transmission of the challenge data has reached a predetermined waiting time "tw". When the time elapsed has reached the predetermined waiting time "tw", the program jumps from the step S109 to a step S110. Otherwise, the program returns from the step S109 to the step S103.

The response data may be replaced by peculiar data or ID data (identification data) of the receiver apparatus 200. In this case, the step S101 is generally omitted from the program segment. In addition, the receiver apparatus 200 is designed to transmit the peculiar data or the ID data rather than the response data.

The step S104 accesses the ROM 106 or the RAM 108, and selects one from among the public keys which corresponds to the reliability indicated by the parameter value "k". The selected public key mates or matches with a secret key corresponding to the present reliability. The step S104 decrypts the response data in response to the selected public key.

A step S105 following the step S104 compares the decryption-resultant response data with the challenge data. Specifically, the step S105 decides whether or not the decryption-resultant response data are the same as the challenge data. When the decryption-resultant response data are the same as the challenge data, the program advances from the step S105 to a step S106. Otherwise, the program advances from the step S105 to a step S107.

The step S106 equalizes the parameter value L to the parameter value "k". This means a decision that the reliability of the receiver apparatus 200 is equal to the reliability corresponding to the selected public key. After the step S106, the program advances to the step S110.

The step S107 increments the parameter value "k" by "1" according to a statement "k=k+1". After the step S107, the program advances to a step S108.

The step S108 decides whether or not the parameter value "k" exceeds the predetermined natural number N. When the parameter value "k" exceeds the predetermined natural number N, the program advances from the step S108 to the step S110. Otherwise, the program returns from the step S108 to the step S104.

Accordingly, in the case where the decryption-resultant response data differ from the challenge data, the selected public key is changed from one to another in the direction of increasing the reliability (the parameter value "k") and the response data are decrypted in response to the newly selected public key. Then, the new decryption-resultant response data are compared with the challenge data. The change of the selected public key and the decryption of the response data continue to be repeated until the new decryption-resultant response data become equal to the challenge data or the parameter value "k" exceeds the predetermined natural number N.

It should be noted that the change of the selected public key may be in a direction different from the reliability increasing direction.

In the case where the response data remain not received for the predetermined waiting time "tw" or longer from the moment of the transmission of the challenge data, the program jumps from the step S109 to the step S110 so that the step S106 is unexecuted. Therefore, in this case, the parameter value L remains equal to "1", that is, the lowest.

Steps of setting the parameter value L to "1" (the lowest) may be added to the position between the steps S108 and S110, and the position between the steps S109 and S110. In this case, it is unnecessary for the step S102 to initialize the parameter value L to "1" (the lowest).

The step S110 refers to the parameter value L. The parameter value L is also called the receiver-apparatus reliability L. The step S110 accesses the contents information in the storage device 110, and reads out the signal representative of the designated reference reliability Lp assigned to the contents information. The step S110 compares the receiver-apparatus reliability L with the designated reference reliability Lp. When the receiver-apparatus reliability L is equal to or greater than the designated reference reliability Lp, the program advances from the step S110 to a step S111. Otherwise, the program advances from the step S110 to a step S113.

The step S111 starts the transfer of the contents information from the storage device 110 to the communication interface 102. The step S111 controls the communication interface 102 to start the transmission of the contents information to the transmission medium 150. The contents information is propagated along the transmission medium 150 before reaching the communication interface 202 in the receiver apparatus 200. After the step $111, the program advances to a step S112.

The step S112 decides whether or not the transmission of the contents information has been completed. When the transmission of the contents information has been completed, the program exits from the step S112 and then the current execution cycle of the program segment ends. Otherwise, the step S112 is repeated.

The step S113 controls the communication interface 102 to transmit a warning signal to the transmission medium 150. The warning signal is propagated along the transmission medium 150 before reaching the communication interface 202 in the receiver apparatus 200. The warning signal indicates prohibition on the transmission of the contents information. The warning signal may indicate a warning message. The warning signal may be replaced by a predetermined signal. After the step S113, the current execution cycle of the program segment ends.

Accordingly, in the case where the receiver-apparatus reliability L is smaller than the designated reference reliability Lp, the step S113 is executed while the step S111 is unexecuted. Thus, in this case, the warning signal is transmitted to the transmission medium 150 while the transmission of the contents information is prevented.

Preferably, the designated reference reliability Lp is changed from contents information to contents information. For example, the designated reference reliability Lp is set to the level "4" for contents information representing a pay-per-view (PPV) program. The designated reference reliability Lp is set to the level "3" for contents information representing a non-PPV movie or a non-PPV drama. The designated reference reliability Lp is set to the level "2" for contents information representing a non-PPV news program. The designated reference reliability Lp is set to the level "1" for some of other contents information.

The storage device 110 may be divided into a first sub-unit for storing contents information having a reference reliability Lp equal to the level "1", a second sub-unit for storing contents information having a reference reliability Lp equal to the level "2", a third sub-unit for storing contents information having a reference reliability Lp equal to the level "3", and a fourth sub-unit for storing contents information having a reference reliability Lp equal to the level "4". In this case, it is preferable to limit accesses to the sub-units in accordance with the reliability of the receiver apparatus 200.

A mark hole or holes representing a designated reference reliability Lp may be provided in a cassette containing a recording medium on which contents information is recorded. In this case, the designated reference reliability Lp of the contents information is read out from the mark hole or holes. A seal with a printed barcode representing a designated reference reliability Lp may be attached to a cassette containing a recording medium on which contents information is recorded. In this case, the designated reference reliability Lp of the contents information is read out from the barcode. An IC memory storing data representative of a designated reference reliability Lp may be attached to a cassette containing a recording medium on which contents information is recorded. In this case, the designated reference reliability Lp of the contents information is read out from the IC memory.

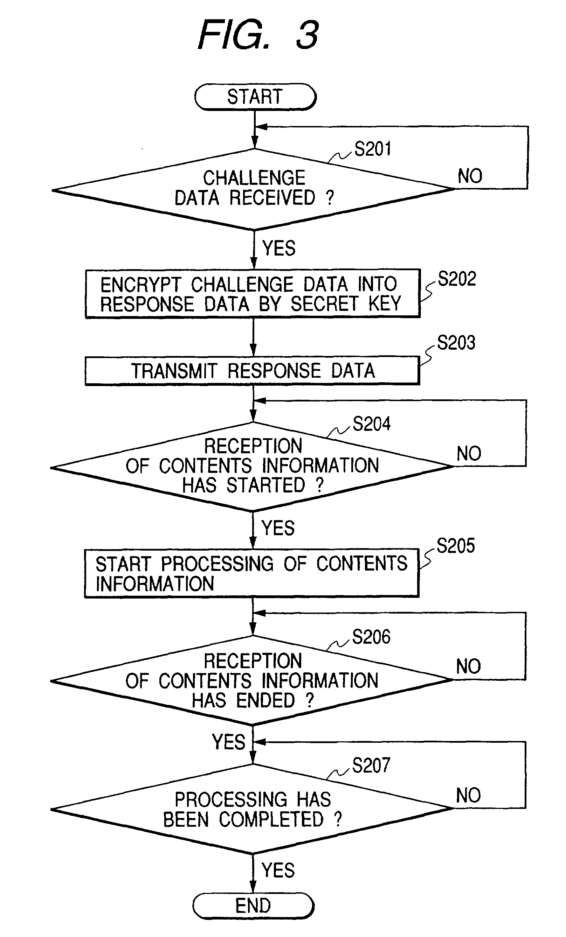

In the receiver apparatus 200, the processing unit 204 operates in accordance with a control program stored in the ROM 206. The control program may be fed to the RAM 208 from an external via the input/output port 210. Fig. 3 is a flowchart of a segment of the control program for the processing unit 204. The program segment in Fig. 3 relates to authentication and contents-information reception.

With reference to Fig. 3, a first step S201 of the program segment accesses the communication interface 202, and decides whether or not challenge data have been received by the communication interface 202. When the challenge data have been received, the program advances from the step S201 to a step S202. Otherwise, the step S201 is repeated.

The step S202 accesses the ROM 206 or the RAM 208, and reads out the data of the secret key therefrom. The step S202 encrypts the challenge data in response to the secret key.

A step S203 following the step S202 feeds the encryption-resultant challenge data to the communication interface 202. The step S203 controls the communication interface 202 to transmit the encryption-resultant challenge data to the transmission medium 150 as response data. The response data (the encryption-resultant challenge data) are propagated along the transmission medium 150 before reaching the communication interface 102 in the sender apparatus 100. After the step S203, the program advances to a step S204.

The step S204 accesses the communication interface 202, and decides whether or not contents information has started to be received by the communication interface 202. When the contents information has started to be received, the program advances from the step S204 to a step S205. Otherwise, the step S204 is repeated.

The step S205 transfers the contents information to the recording device 214 and the display 218 through the input/output port 210. The step S205 controls the recording device 214 to start the recording of the contents information on the recording medium 216. The step S205 controls the display 218 to start the indication of the contents information. After the step S205, the program advances to a step S206.

The step S206 accesses the communication interface 202, and decides whether or not the reception of the contents information has been completed. When the reception of the contents information has been completed, the program advances from the step S206 to a step S207. Otherwise, the step S206 is repeated.

The step S207 decides whether or not the recording of the contents information by the recording device 214 and the indication of the contents information by the display 218 have been completed. When the recording of the contents information and the indication of the contents information have been completed, the program exits from the step S207 and then the current execution cycle of the program segment ends. Otherwise, the step S207 is repeated.

### Second Embodiment

A second embodiment of this invention is similar to the first embodiment thereof except for design changes mentioned later. In general, the receiver apparatus 200 has one selected from among different-level reliabilities relating to at least one of copyright protection and information secrecy. In the sender apparatus 100 of the second embodiment of this invention, peculiar data pieces (identification data pieces or ID data pieces) corresponding to the respective different-level reliabilities are stored in the ROM 106 or the RAM 108. Specifically, the peculiar data pieces correspond to reliability parameter values "1", "2", "3", ···, and "N", respectively. Here, N denotes a predetermined natural number equal to or greater than "2".

The receiver apparatus 200 in the second embodiment of this invention is designed as follows. One among different-level reliabilities is previously assigned to the receiver apparatus 200 in accordance with its conditions relating to at least one of copyright protection and information secrecy. In other words, the receiver apparatus 200 has one selected from among different-level reliabilities relating to at least one of copyright protection and information secrecy. There are peculiar data pieces corresponding to the respective different-level reliabilities. One is previously selected from among the peculiar data pieces in accordance with the reliability of the receiver apparatus 200. The selected peculiar data piece is stored in the ROM 206 or the RAM 208.

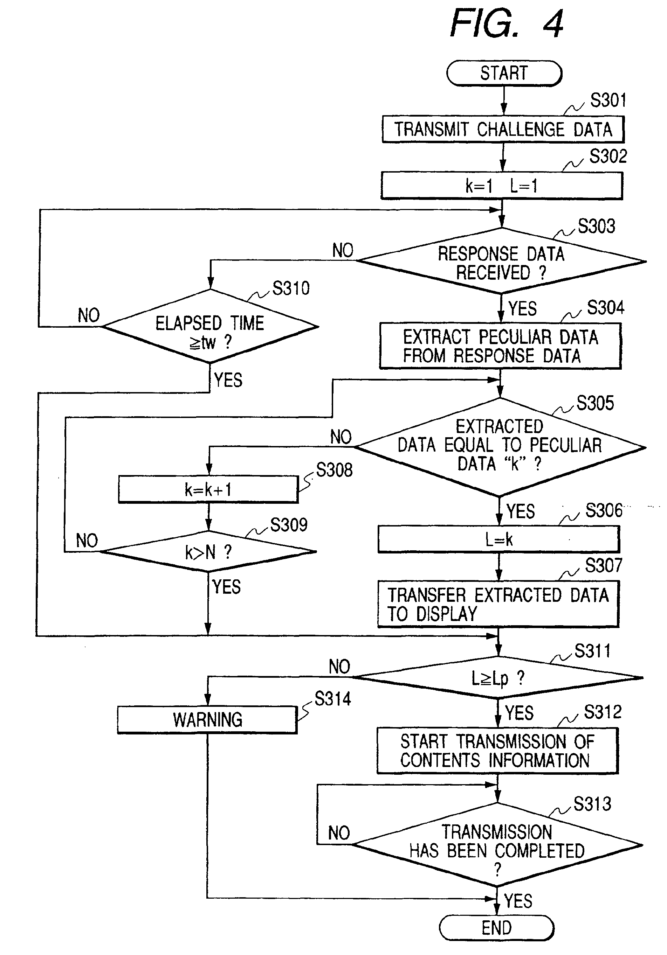

Fig. 4 is a flowchart of a segment of a control program for the processing unit 104 in the sender apparatus 100 of the second embodiment of this invention. The program segment in Fig. 4 relates to authentication and contents-information transmission.

With reference to Fig. 4, a first step S301 of the program segment transfers the challenge data from the ROM 106 or the RAM 108 to the communication interface 102. The step S301 controls the communication interface 102 to transmit the challenge data to the transmission medium 150. The challenge data are propagated along the transmission medium 150 before reaching the communication interface 202 in the receiver apparatus 200.

The step S301 may encrypt the challenge data. In this case, the encryption-resultant challenge data are transmitted to the transmission medium 150.

A step S302 following the step S301 initializes a parameter value "k" to "1" (the lowest). In addition, the step S302 initializes a parameter value L to "1" (the lowest). The parameter value "k" indicates a reliability corresponding to a peculiar data piece subjected to comparison. The parameter value L indicates the reliability of the receiver apparatus 200 which is decided by the sender apparatus 100. After the step S302, the program advances to a step S303.

The step S303 accesses the communication interface 102, and decides whether or not response data have been received by the communication interface 102. The response data are transmitted from the receiver apparatus 200. When the response data have been received, the program advances from the step S303 to a step S304. Otherwise, the program advances from the step S303 to a step S310.

The step S310 decides whether or not a time elapsed since the moment of the transmission of the challenge data has reached a predetermined waiting time "tw". When the time elapsed has reached the predetermined waiting time "tw", the program jumps from the step S310 to a step S311. Otherwise, the program returns from the step S310 to the step S303.

The step S304 extracts a peculiar data piece (an identification data piece or an ID data piece) from the response data according to predetermined calculation responsive to the challenge data. The predetermined calculation is inverse with respect to calculation in the receiver apparatus 200 which is executed for generating the response data. After the step S304, the program advances to a step S305.

The step S305 accesses the ROM 106 or the RAM 108, and selects one from among the peculiar data pieces which corresponds to the reliability indicated by the parameter value "k". The step S305 compares the selected peculiar data piece with the extracted peculiar data piece (the peculiar data piece extracted by the step S304). Specifically, the step S305 decides whether or not the selected peculiar data piece is the same as the extracted peculiar data piece. When the selected peculiar data piece is the same as the extracted peculiar data piece, the program advances from the step S305 to a step S306. Otherwise, the program advances from the step S305 to a step S308.

The step S306 equalizes the parameter value L to the parameter value "k". This means a decision that the reliability of the receiver apparatus 200 is equal to the reliability corresponding to the selected peculiar data piece.

A step S307 following the step S306 transfers the extracted peculiar data piece to the display 116 and the loudspeaker 118 through the input/output port 112. The step S307 controls the display 116 to indicate the extracted peculiar data piece. The step S307 controls the loudspeaker 118 to convert the extracted peculiar data piece into corresponding sound. After the step S307, the program advances to the step S311.

The step S308 increments the parameter value "k" by "1" according to a statement "k=k+1". After the step S308, the program advances to a step S309.

The step S309 decides whether or not the parameter value "k" exceeds the predetermined natural number N. When the parameter value "k" exceeds the predetermined natural number N, the program advances from the step S309 to the step S311. Otherwise, the program returns from the step S309 to the step S305.

Accordingly, in the case where the extracted peculiar data piece differs from the selected peculiar data piece, the selected peculiar data piece is changed from one to another in the direction of increasing the reliability (the parameter value "k"). Then, the newly-selected peculiar data piece is compared with the extracted peculiar data piece. The change of the selected peculiar data piece and the comparison of the selected peculiar data piece with the extracted peculiar data piece continue to be repeated until the newly-selected peculiar data piece becomes equal to the extracted peculiar data piece or the parameter value "k" exceeds the predetermined natural number N.

It should be noted that the change of the selected peculiar data piece may be in a direction different from the reliability increasing direction.

In the case where the response data remain not received for the predetermined waiting time "tw" or longer from the moment of the transmission of the challenge data, the program jumps from the step S310 to the step S311 so that the step S306 is unexecuted. Therefore, in this case, the parameter value L remains equal to "1", that is, the lowest.

Steps of setting the parameter value L to "1" (the lowest) may be added to the position between the steps S309 and S311, and the position between the steps S310 and S311. In this case, it is unnecessary for the step S302 to initialize the parameter value L to "1" (the lowest).

The step S311 refers to the parameter value L. The parameter value L is also called the receiver-apparatus reliability L. The step S311 accesses the contents information in the storage device 110, and reads out the signal representative of the designated reference reliability Lp assigned to the contents information. The step S311 compares the receiver-apparatus reliability L with the designated reference reliability Lp. When the receiver-apparatus reliability L is equal to or greater than the designated reference reliability Lp, the program advances from the step S311 to a step S312. Otherwise, the program advances from the step S311 to a step S314.

The step S312 starts the transfer of the contents information from the storage device 110 to the communication interface 102. The step S312 controls the communication interface 102 to start the transmission of the contents information to the transmission medium 150. The contents information is propagated along the transmission medium 150 before reaching the communication interface 202 in the receiver apparatus 200. After the step S311, the program advances to a step S313.

The step S313 decides whether or not the transmission of the contents information has been completed. When the transmission of the contents information has been completed, the program exits from the step S313 and then the current execution cycle of the program segment ends. Otherwise, the step S313 is repeated.

The step S314 controls the communication interface 102 to transmit a warning signal to the transmission medium 150. The warning signal is propagated along the transmission medium 150 before reaching the communication interface 202 in the receiver apparatus 200. The warning signal indicates prohibition on the transmission of the contents information. The warning signal may indicate a warning message. The warning signal may be replaced by a predetermined signal. After the step S314, the current execution cycle of the program segment ends.

Accordingly, in the case where the receiver-apparatus reliability L is smaller than the designated reference reliability Lp, the step S314 is executed while the step S312 is unexecuted. Thus, in this case, the warning signal is transmitted to the transmission medium 150 while the transmission of the contents information is prevented.

The program segment in Fig. 4 may be modified as follows. In a modification, the step S304 is omitted, and the step S303 is directly followed by the step S305. The step S305 accesses the ROM 106 or the RAM 108, and selects one from among the peculiar data pieces which corresponds to the reliability indicated by the parameter value "k". The step S305 generates correct response data from the selected peculiar data piece and the challenge data by executing calculation equal to that executed in the receiver apparatus 200. Then, the step S305 decides whether or not the received response data are the same as the correct response data. When the received response data are the same as the correct response data, the program advances from the step S305 to the step S306. Otherwise, the program advances from the step S305 to the step S308.

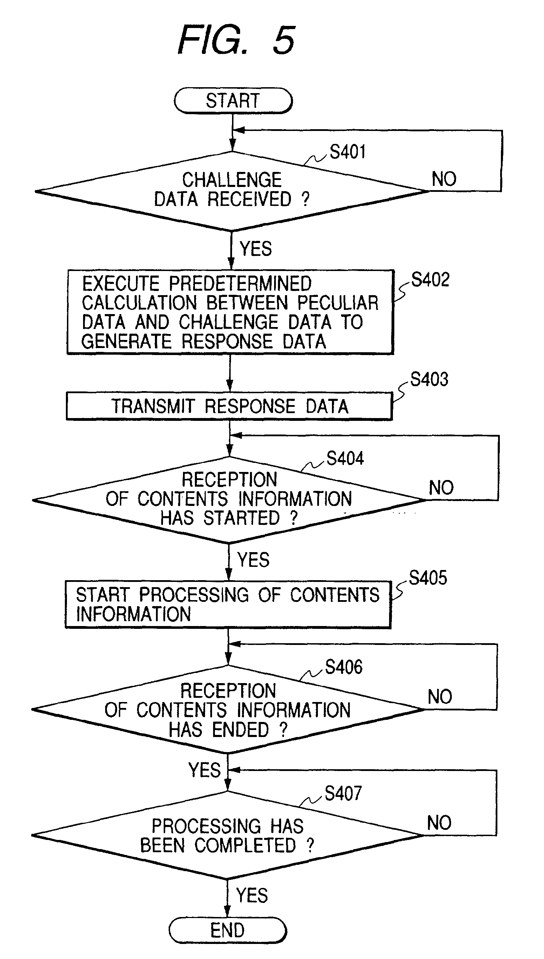

Fig. 5 is a flowchart of a segment of a control program for the processing unit 204 in the receiver apparatus 200 of the second embodiment of this invention. The program segment in Fig. 5 relates to authentication and contents-information reception.

With reference to Fig. 5, a first step S401 of the program segment accesses the communication interface 202, and decides whether or not challenge data have been received by the communication interface 202. When the challenge data have been received, the program advances from the step S401 to a step S402. Otherwise, the step S401 is repeated.

The step S402 accesses the ROM 206 or the RAM 208, and reads out the peculiar data piece therefrom. The step S402 executes predetermined calculation between the peculiar data piece and the challenge data. An example of the predetermined calculation is multiplication or Exclusive-OR operation.

A step S403 following the step S402 feeds the result of the calculation by the step S402 to the communication interface 202. The step S403 controls the communication interface 202 to transmit the calculation result to the transmission medium 150 as response data containing the peculiar data piece. The response data are propagated along the transmission medium 150 before reaching the communication interface 102 in the sender apparatus 100. After the step S403, the program advances to a step S404.

The step S404 accesses the communication interface 202, and decides whether or not contents information has started to be received by the communication interface 202. When the contents information has started to be received, the program advances from the step S404 to a step S405. Otherwise, the step S404 is repeated.

The step S405 transfers the contents information to the recording device 214 and the display 218 through the input/output port 210. The step S405 controls the recording device 214 to start the recording of the contents information on the recording medium 216. The step S405 controls the display 218 to start the indication of the contents information. After the step S405, the program advances to a step S406.

The step S406 accesses the communication interface 202, and decides whether or not the reception of the contents information has been completed. When the reception of the contents information has been completed, the program advances from the step S406 to a step S407. Otherwise, the step S406 is repeated.

The step S407 decides whether or not the recording of the contents information by the recording device 214 and the indication of the contents information by the display 218 have been completed. When the recording of the contents information and the indication of the contents information have been completed, the program exits from the step S407 and then the current execution cycle of the program segment ends. Otherwise, the step S407 is repeated.

The peculiar data pieces stored in the sender apparatus 100 may be at least a portion of authentication-purpose contents information representing copyrighted matters such as poems, compositions, music, images, pictures, or logos. Similarly, the peculiar data piece stored in the receiver apparatus 200 may be at least a portion of authentication-purpose contents information representing copyrighted matters such as poems, compositions, music, images, pictures, or logos. In these case, the peculiar data pieces are also referred to as the certificate contents-information pieces (the authentication-purpose contents-information pieces). Upon the reception of the challenge data from the sender apparatus 100, the receiver apparatus 200 returns response data to the sender apparatus 200. The response data include the certificate contents-information piece. In the case where response data including a certificate contents-information piece resulting from illegally copying is returned to the sender apparatus 100 from a receiver apparatus 200 which does not have any legitimate certificate contents-information piece, it can easily be proved that the copyright of the present certificate contents-information piece has been infringed and hence the present certificate contents-information piece has been illegally used.

In the sender apparatus 100, the step S304 of the program segment in Fig. 4 extracts a certificate contents-information piece (a peculiar data piece) from the received response data. Then, the step S307 transfers the extracted certificate contents-information piece to the display 116 and the loudspeaker 118 through the input/output port 112. The step S307 controls the display 116 to indicate the extracted certificate contents-information piece. For example, a poem, a composition, a picture, or an image represented by the extracted certificate contents-information piece is indicated by the display 116 for a predetermined short time or several seconds. The step S307 controls the loudspeaker 118 to convert the extracted peculiar data piece into corresponding sound. For example, a voice corresponding to a poem or a composition represented by the extracted certificate contents-information piece is generated by the loudspeaker 118. Music represented by the extracted certificate contents-information piece is reproduced by the loudspeaker 118.

It should be noted that the receiver apparatus 200 may be modified to indicate the certificate contents-information piece on the display 218.

Only peculiar data pieces corresponding to copyrighted matters may be used in the authentication. In the case where the authentication between a sender apparatus 100 and a receiver apparatus 200 is illegally implemented, a peculiar data piece corresponding to a copyrighted matter is transmitted from the receiver apparatus 200 to the sender apparatus 100 and thus the copyright of the matter is infringed. This illegal conduct can easily be found since the peculiar data piece corresponding to the copyrighted matter is transmitted to the sender apparatus 100.

### Third Embodiment

A third embodiment of this invention is similar to the first embodiment thereof except for design changes mentioned later.

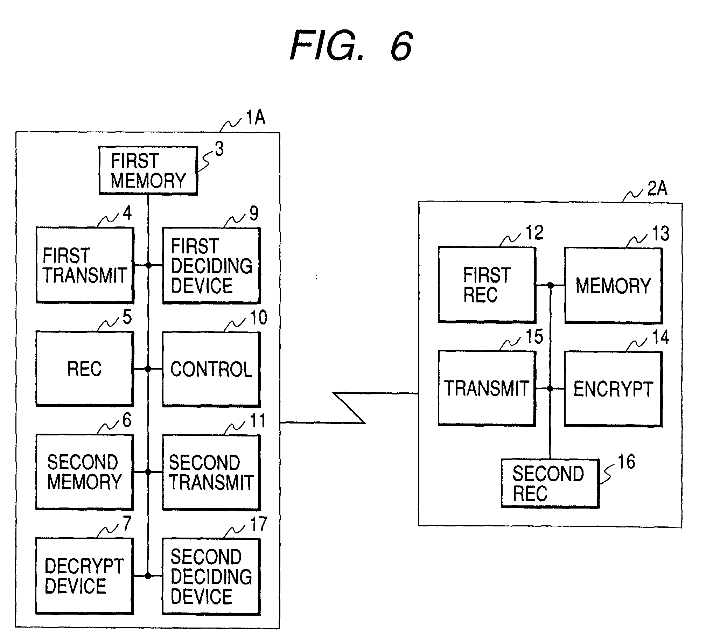

Fig. 6 shows a contents-information transmission system according to the third embodiment of this invention. The system of Fig. 6 includes a sender apparatus 1A and a receiver apparatus 2A which are connected to each other via a transmission medium 50. The sender apparatus 1A is also referred to as the authentication apparatus or the reliability deciding apparatus. Operation of the sender apparatus 1A is similar to that of the sender apparatus 100 in the first embodiment of this invention (see Fig. 1). The receiver apparatus 2A is also referred to as the certificate apparatus, the reliability decided apparatus, the contents-information handling apparatus. Operation of the receiver apparatus 2A is similar to that of the receiver apparatus 200 in the first embodiment of this invention (see Fig. 1). The transmission medium 50 is similar to the transmission medium 150 in Fig. 1.

The sender apparatus 1A includes a first memory 3, a first transmitter 4, a receiver 5, a second memory 6, a decrypting device 7, a first deciding device 9, a controller 10, a second transmitter 11, and a second deciding device 17 which are connected to each other.

The first memory 3 stores challenge data (predetermined data). The first transmitter 4 reads out the challenge data from the first memory 3, and transmits the challenge data to the transmission medium 50. The challenge data are propagated along the transmission medium 50 before reaching the receiver apparatus 2A. The receiver 5 accepts response data which have been transmitted from the receiver apparatus 2A, and which have been propagated along the transmission medium 50. The receiver 5 feeds the received response data to the decrypting device 7. The second memory 6 stores data representing public keys corresponding to respective possible different-level reliabilities of the receiver apparatus 2A. The second memory 6 informs the decrypting device 7 of the public keys. The decrypting device 7 decrypts the response data in response to each of the public keys.

The first deciding device 9 reads out the challenge data from the first memory 3. The first deciding device 9 decides whether or not the data of the result of the decryption by the decrypting device 7 are the same as the challenge data. When the decryption-resultant data are the same as the challenge data, the first deciding device 9 decides that the reliability of the receiver apparatus 2A is equal to the reliability corresponding to the public key currently used by the decrypting device 7. The first deciding device 9 informs the second deciding device 17 of the decided reliability of the receiver apparatus 2A. The second deciding device 17 compares the decided reliability of the receiver apparatus 2A and a reference reliability related to contents information. The controller 10 controls the transmission of the contents information to the receiver apparatus 2A in response to the result of the comparison by the second deciding device 17. The second transmitter 11 transmits the contents information to the transmission medium 50 under the control by the controller 10. The contents information is propagated along the transmission medium 50 before reaching the receiver apparatus 2A.

The controller 10, the second transmitter 11, and the second deciding device 17 may be omitted from the sender apparatus 1A to form a reliability deciding apparatus which operates to decide the reliability of the receiver apparatus 2A.

The receiver apparatus 2A includes a first receiver 12, a memory 13, an encryptor 14, a transmitter 15, and a second receiver 16.

The first receiver 12 accepts the challenge data (the predetermined data) which have been transmitted from the sender apparatus 1A, and which have been propagated along the transmission medium 50. The first receiver 12 feeds the accepted challenge data to the encryptor 14. The memory 13 stores data representative of a secret key corresponding to specified one of the reliabilities, that is, the reliability of the receiver apparatus 2A. The memory 13 informs the encryptor 14 of the secret key. The encryptor 14 encrypts the challenge data into response data in accordance with the secret key. The encryptor 14 feeds the response data to the transmitter 15. The transmitter 15 transmits the response data to the transmission medium 50. The response data are propagated along the transmission medium 50 before reaching the sender apparatus 1A. The second receiver 16 accepts the contents information which has been transmitted from the sender apparatus 1A, and which has been propagated along the transmission medium 50.

The second receiver 16 may be omitted from the receiver apparatus 2A to form a reliability decided apparatus.

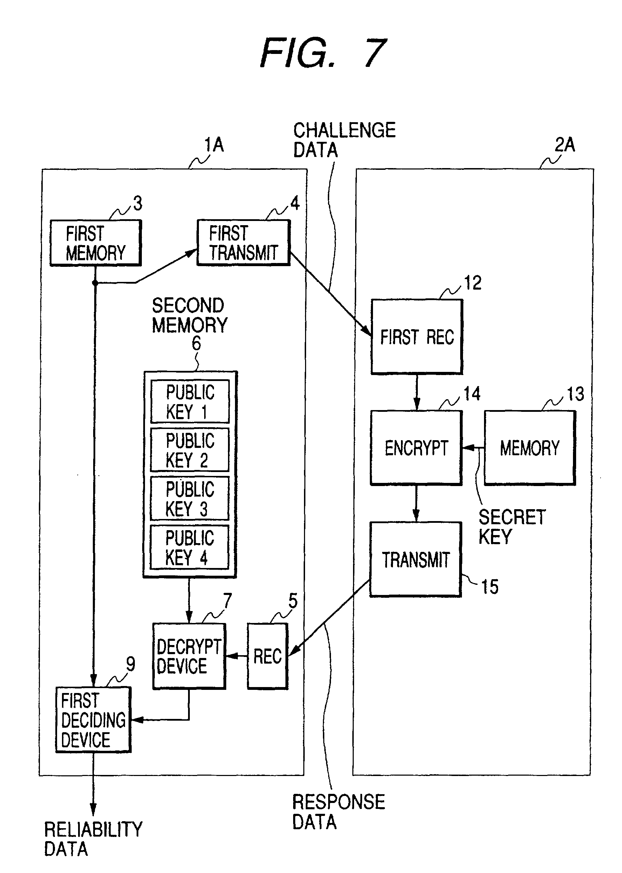

Fig. 7 shows flows of data (signals) in a portion of the system of Fig. 6. With reference to Fig. 7, in the sender apparatus 1A, the challenge data are transferred from the first memory 3 to the first transmitter 4 and the first deciding device 9. The challenge data are transmitted from the first transmitter 4 in the sender apparatus 1A to the first receiver 12 in the receiver apparatus 2A. In the receiver apparatus 2A, the challenge data are fed from the first receiver 12 to the encryptor 14. The secret-key data are fed from the memory 13 to the encryptor 14. The encryptor 14 encrypts the challenge data in response to the secret-key data, thereby generating the response data. The response data are fed from the encryptor 14 to the transmitter 15.

The response data are transmitted from the transmitter 15 in the receiver apparatus 2A to the receiver 5 in the sender apparatus 1A. In the sender apparatus 1A, the response data are fed from the receiver 5 to the decrypting device 7. Data representing public keys "1", "2", "3", and "4" are fed from the second memory 6 to the decrypting device 7. The decrypting device 7 decrypts the response data in response to each of the public keys. The data of the result of the decryption by the decrypting device 7 are fed to the first deciding device 9. The first deciding device 9 decides whether or not the decryption-resultant data are the same as the challenge data. When the decryption-resultant data are the same as the challenge data, the first deciding device 9 decides that the reliability of the receiver apparatus 2A is equal to the reliability corresponding to the public key currently used by the decrypting device 7. The data of the decided reliability of the receiver apparatus 2A are outputted from the first deciding device 9.

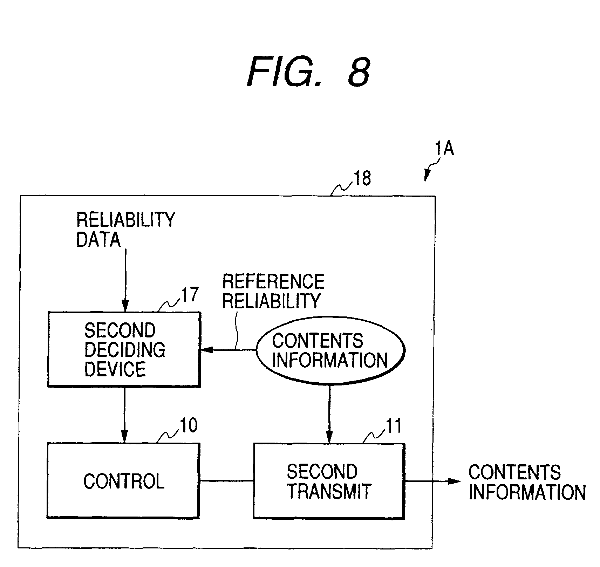

As shown in Fig. 8, in the sender apparatus 1A, the controller 10, the second transmitter 11, and the second deciding device 17 compose a contents-information transmitting apparatus 18. The decided reliability data outputted from the first deciding device 9 (see Figs. 6 and 7) are fed to the second deciding device 17. The second deciding device 17 is informed of the reference reliability related to the contents information. The second deciding device 17 compares the decided reliability of the receiver apparatus 2A with the reference reliability. The data of the result of the comparison are fed from the second deciding device 17 to the controller 10. The contents information is fed to the second transmitter 11. The controller 10 controls the second transmitter 11 in response to the comparison-result data. The second transmitter 11 transmits the contents information to the transmission medium 50 under the control by the controller 10. The contents information is propagated along the transmission medium 50 before reaching the receiver apparatus 2A.

### Fourth Embodiment

A fourth embodiment of this invention is similar to the second embodiment thereof except for design changes mentioned later.

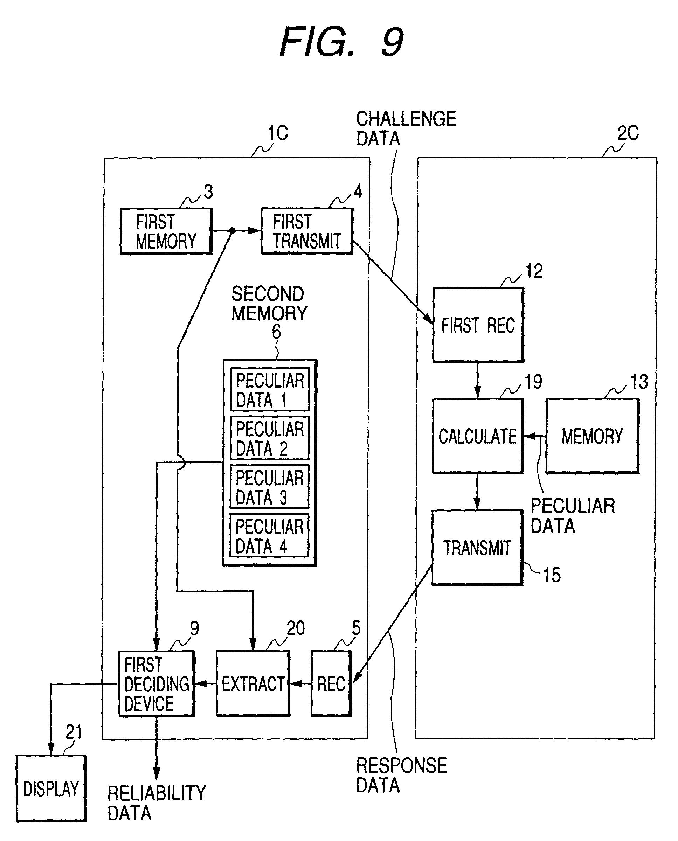

Fig. 9 shows a portion of a contents-information transmission system according to the fourth embodiment of this invention. The system of Fig. 9 includes a sender apparatus 1C and a receiver apparatus 2C which are connected to each other via a transmission medium. The transmission medium is similar to the transmission medium 150 in Fig. 1. The sender apparatus 1C is also referred to as the authentication apparatus or the reliability deciding apparatus. Operation of the sender apparatus 1C is similar to that of the sender apparatus 100 in the second embodiment of this invention. The receiver apparatus 2C is also referred to as the certificate apparatus, the reliability decided apparatus, the contents-information handling apparatus. Operation of the receiver apparatus 2C is similar to that of the receiver apparatus 200 in the second embodiment of this invention.

The sender apparatus 1C is basically similar to the sender apparatus 1A in Figs. 6 and 7 except that an extractor 20 and a display 21 are additionally provided, and the decrypting device 7 (see Figs. 6 and 7) is omitted. The display 21 may be located outside a main body of the sender apparatus 1C. The receiver apparatus 2C is basically similar to the receiver apparatus 2A in Figs. 6 and 7 except that a calculator 19 is provided instead of the encryptor 14 (see Figs. 6 and 7).

In the sender apparatus 1C, the extractor 20 reads out challenge data from the first memory 3. The receiver 5 feeds received response data to the extractor 20. The extractor 20 extracts a peculiar data piece from the response data according to predetermined calculation responsive to the challenge data. The predetermined calculation is inverse with respect to calculation executed by the receiver apparatus 2C to generate the response data. The extractor 20 feeds the extracted peculiar data piece to the first deciding device 9. The second memory 6 stores data representing peculiar data pieces (identification data pieces or ID data pieces) "1", "2", "3", and "4" corresponding to respective different-level reliabilities of the receiver apparatus 2C. The second memory 6 feeds the peculiar data pieces to the first deciding device 9.

In the sender apparatus 1C, the first deciding device 9 compares the extracted peculiar data piece with the peculiar data pieces fed from the second memory 6. Thereby, the first deciding device 9 searches the peculiar data pieces fed from the second memory 6 for one equal to the extracted peculiar data piece. Then, the first deciding device 9 decides that the reliability of the receiver apparatus 2C is equal to the reliability corresponding to the peculiar data piece which is fed from the second memory 6, and which is the same as the extracted peculiar data piece. The first deciding device 9 informs the second deciding device 17 (see Fig. 8) of the decided reliability of the receiver apparatus 2C. The first deciding device 9 transfers the extracted peculiar data piece to the display 21. The display 21 indicates the extracted peculiar data piece.

In the receiver apparatus 2C, the memory 13 stores a peculiar data piece. The peculiar data piece is previously selected from among candidate peculiar data pieces in accordance with the reliability of the receiver apparatus 2C. The peculiar data piece is fed from the memory 13 to the calculator 19. The challenge data are fed from the first receiver 12 to the calculator 19. The calculator 19 executes predetermined calculation between the peculiar data piece and the challenge data, thereby generating the response data containing the peculiar data piece. The response data are fed from the calculator 19 to the transmitter 15.

Fig. 9 also shows flows of data (signals) in the portion of the present system. With reference to Fig. 9, in the sender apparatus 1C, the challenge data are transferred from the first memory 3 to the first transmitter 4 and the extractor 20. The challenge data are transmitted from the first transmitter 4 in the sender apparatus 1C to the first receiver 12 in the receiver apparatus 2C. In the receiver apparatus 2C, the challenge data are fed from the first receiver 12 to the calculator 19. The peculiar data piece is fed from the memory 13 to the calculator 19. The calculator 19 executes predetermined calculation between the peculiar data piece and the challenge data, thereby generating the response data containing the peculiar data piece. The response data are fed from the calculator 19 to the transmitter 15.

The response data are transmitted from the transmitter 15 in the receiver apparatus 2C to the receiver 5 in the sender apparatus 1C. In the sender apparatus 1C, the response data are fed from the receiver 5 to the extractor 20. The extractor 20 extracts the peculiar data piece (the identification data piece or the ID data piece) from the response data according to calculation inverse with respect to the calculation in the receiver apparatus 2C which is executed for generating the response data. The extracted peculiar data piece is fed from the extractor 20 to the first deciding device 9. The peculiar data pieces are fed from the second memory 6 to the first deciding device 9. The first deciding device 9 finds one from among the peculiar data pieces fed from the second memory 6 which is the same as the extracted,peculiar data piece. The first deciding device 9 decides that the reliability of the receiver apparatus 2C is equal to the reliability corresponding to the peculiar data piece which is fed from the second memory 6, and which is the same as the extracted peculiar data piece. The data of the decided reliability of the receiver apparatus 2C are outputted from the first deciding device 9 to the second deciding device 17 (see Fig. 8). The extracted peculiar data piece is further transferred from the first deciding device 9 to the display 21.

### Fifth Embodiment

A fifth embodiment of this invention is similar to the fourth embodiment thereof except for design changes mentioned later.

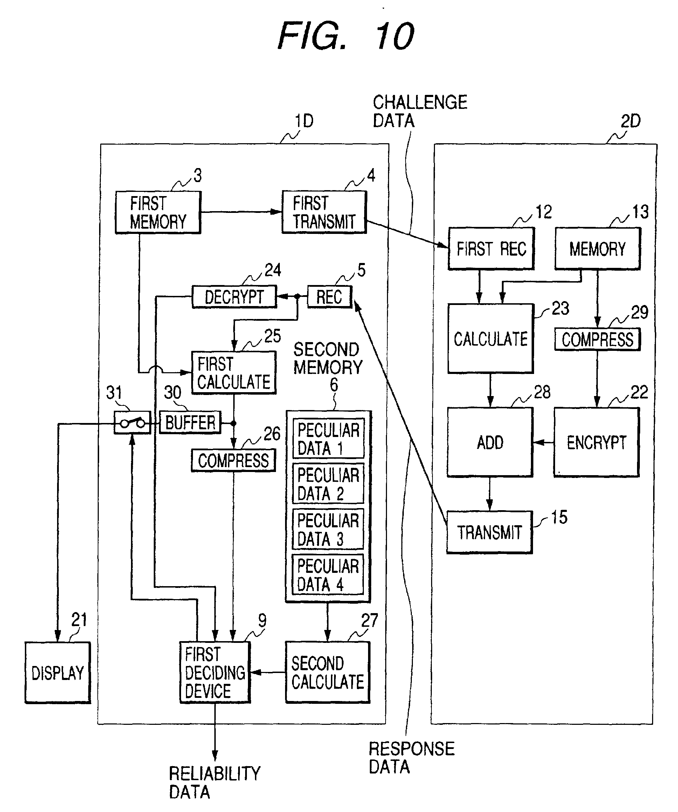

Fig. 10 shows a portion of a contents-information transmission system according to the fifth embodiment of this invention. The system of Fig. 10 includes a sender apparatus 1D and a receiver apparatus 2D which are connected to each other via a transmission medium. The transmission medium is similar to the transmission medium 150 in Fig. 1. The sender apparatus 1D is also referred to as the authentication apparatus or the reliability deciding apparatus. The receiver apparatus 2D is also referred to as the certificate apparatus, the reliability decided apparatus, the contents-information handling apparatus.

The sender apparatus 1D is basically similar to the sender apparatus 1C in Fig. 9 except that a decrypting device 24, a first calculator 25, a compressor 26, a second calculator 27, a buffer memory 30, and a switch 31 are additionally provided, and the extractor 20 (see Fig. 9) is omitted. The receiver apparatus 2D is basically similar to the receiver apparatus 2C in Fig. 9 except that an encryptor 22, a calculator 23, an adder 28, and a compressor 29 are additionally provided, and the calculator 19 (see Fig. 9) is omitted.

In the sender apparatus 1D, the receiver 5 feeds received response data to the decrypting device 24 and the first calculator 25. The decrypting device 24 decrypts a supplement portion of the response data into decryption-resultant data corresponding to a compression-resultant peculiar data piece generated in the receiver apparatus 2D. The decrypting device 24 feeds the decryption-resultant data (the compression-resultant peculiar data piece) to the first deciding device 9. The first calculator 25 reads out challenge data from the first memory 3. The first calculator 25 executes predetermined calculation between the challenge data and a main portion of the response data, thereby extracting a peculiar data piece from the main portion of the response data. The first calculator 25 stores the extracted peculiar data piece into the buffer memory 30. The first calculator 25 feeds the extracted peculiar data piece to the compressor 26. The compressor 26 compresses the extracted peculiar data piece according to, for example, a predetermined hash function. Preferably, the predetermined hash function is of an SHA-1 (secure hash algorithm 1) type for generating a 160-bit hash value. The compressor 26 is similar to the compressor 29 in the receiver apparatus 2D. Specifically, the compressors 26 and 29 are equal in at least one point that they use a same function (a common function). The compressor 26 feeds the compression-resultant peculiar data piece to the first deciding device 9. The second calculator 27 reads out peculiar data pieces from the second memory 6. The second calculator 27 processes the peculiar data pieces through compressive calculation based on, for example, the predetermined hash function. The second calculator 27 feeds the processing-resultant peculiar data pieces to the first deciding device 9. The processing-resultant peculiar data pieces correspond to compression-resultant peculiar data pieces, respectively.

In the sender apparatus 1D, the first deciding device 9 compares the decryption-resultant data and the compression-resultant peculiar data piece with each other. When the decryption-resultant data and the compression-resultant peculiar data piece are the same, the first deciding device 9 decides that the response data are legitimate and have not been altered. Otherwise, the first deciding device 9 decides that the response data have been altered. In the case where the response data have been altered, the first deciding device 9 decides that the reliability of the receiver apparatus 2D is equal to the lowest. In the case where the response data have not been altered, the first deciding device 9 compares the compression-resultant peculiar data piece with the processing-resultant peculiar data pieces. Thereby, the first deciding device 9 searches the processing-resultant peculiar data pieces for one equal to the compression-resultant peculiar data piece. Then, the first deciding device 9 decides that the reliability of the receiver apparatus 2D is equal to the reliability corresponding to the processing-resultant peculiar data piece which is the same as the compression-resultant peculiar data piece. The first deciding device 9 informs the second deciding device 17 (see Fig. 8) of the decided reliability of the receiver apparatus 2D. At the same time, the first deciding device 9 closes the switch 31. In this case, the extracted peculiar data piece is further transferred from the buffer memory 30 to the display 21. The display 21 indicates the extracted peculiar data piece.

In the receiver apparatus 2D, the challenge data are fed from the first receiver 12 to the calculator 23. The calculator 23 reads out a peculiar data piece from the memory 13. The calculator 23 executes predetermined calculation between the peculiar data piece and the challenge data. The calculator 23 feeds calculation-resultant data to the adder 28. The compressor 29 reads out the peculiar data piece from the memory 13. The compressor 29 compresses the peculiar data piece according to, for example, the predetermined hash function. The compressor 29 feeds the compression-resultant peculiar data piece to the encryptor 22 as signature data. The encryptor 22 encrypts the signature data. The encryptor 22 feeds the encryption-resultant signature data to the adder 28. The adder 28 combines the calculation-resultant data and the encryption-resultant signature data into response data. The response data have a main portion and a supplement portion. The main portion is occupied by the calculation-resultant data while the supplement portion is formed by the encryption-resultant signature data. The adder 28 feeds the response data to the transmitter 15.

Fig. 10 also shows flows of data (signals) in the portion of the present system. With reference to Fig. 10, in the sender apparatus 1D, the challenge data are transferred from the first memory 3 to the first transmitter 4 and the first calculator 25. The challenge data are transmitted from the first transmitter 4 in the sender apparatus 1D to the first receiver 12 in the receiver apparatus 2D. In the receiver apparatus 2D, the challenge data are fed from the first receiver 12 to the calculator 23. The peculiar data piece is fed from the memory 13 to the calculator 23 and the compressor 29. The calculator 23 executes predetermined calculation between the peculiar data piece and the challenge data, thereby generating a main portion of the response data which contains the peculiar data piece. The main portion of the response data is fed from the calculator 23 to the adder 28. The compressor 29 compresses the peculiar data piece. The compression-resultant peculiar data piece is fed from the compressor 29 to the encryptor 22. The encryptor 22 encrypts the compression-resultant peculiar data piece into a supplement portion of the response data. The supplement portion of the response data is fed from the encryptor 22 to the adder 28. The adder 28 combines the response-data main portion and the response-data supplement portion to complete the response data. The response data are fed from the adder 28 to the transmitter 15.

The response data are transmitted from the transmitter 15 in the receiver apparatus 2D to the receiver 5 in the sender apparatus 1D. In the sender apparatus 1D, the response data are fed from the receiver 5 to the decrypting device 24 and the first calculator 25. The decrypting device 24 decrypts the supplement portion of the response data into decryption-resultant data (a compression-resultant peculiar data piece). The decryption-resultant data (the compression-resultant peculiar data piece) are fed from the decrypting device 24 to the first deciding device 9. The challenge data are fed from the first memory 3 to the first calculator 25. The first calculator 25 executes the predetermined calculation between the challenge data and the main portion of the response data, thereby extracting the peculiar data piece from the main portion of the response data. The extracted peculiar data piece is transferred from the first calculator 25 to the buffer memory 30. In addition, the extracted peculiar data piece is fed from the first calculator 25 to the compressor 26. The compressor 26 compresses the extracted peculiar data piece. The compression-resultant peculiar data piece is fed from the compressor 26 to the first deciding device 9. The peculiar data pieces are fed from the second memory 6 to the second calculator 27. The second calculator 27 processes the peculiar data pieces. The processing-resultant peculiar data pieces are fed from the second calculator 27 to the first deciding device 9.

In the sender apparatus 1D, the first deciding device 9 compares the decryption-resultant data and the compression-resultant peculiar data piece with each other. When the decryption-resultant data and the compression-resultant peculiar data piece are the same, the first deciding device 9 decides that the response data are legitimate and have not been altered. Otherwise, the first deciding device 9 decides that the response data have been altered. In the case where the response data have been altered, the first deciding device 9 decides that the reliability of the receiver apparatus 2D is equal to the lowest. In the case where the response data have not been altered, the first deciding device 9 searches the processing-resultant peculiar data pieces for one equal to the compression-resultant peculiar data piece. Then, the first deciding device 9 decides that the reliability of the receiver apparatus 2D is equal to the reliability corresponding to the processing-resultant peculiar data piece which is the same as the compression-resultant peculiar data piece. The data representing the decided reliability of the receiver apparatus 2D are fed from the first deciding device 9 to the second deciding device 17 (see Fig. 8). At the same time, the switch 31 is closed by the first deciding device 9. When the switch 31 is closed, the extracted peculiar data piece is further transferred from the buffer memory 30 to the display 21.

### Sixth Embodiment

A sixth embodiment of this invention is similar to one of the second, fourth, and fifth embodiments thereof except for design changes mentioned later. In the sixth embodiment of this invention, at least portions of certificate contents-information pieces are used as portions of keys.

### Seventh Embodiment

A seventh embodiment of this invention is similar to one of the first and third embodiments thereof except for design changes mentioned later. In the seventh embodiment of this invention, after the sender apparatus has completed the comparison between the decryption-resultant response data with the challenge data, the receiver apparatus encrypts predetermined authentication-purpose contents information and transmits the encryption-resultant contents information to the sender apparatus. The sender apparatus determines whether or not the encryption-resultant contents information is legitimate. When the encryption-resultant contents information is legitimate, the sender apparatus is enabled to complete the decision of the reliability of the receiver apparatus.

### Eighth Embodiment

An eighth embodiment of this invention is similar to one of the first to seventh embodiments thereof except for design changes mentioned later. In the eighth embodiment of this invention, the challenge data contain a piece indicating that a reliability equal to a specified value or higher is required. The challenge data are transmitted from the sender apparatus to the receiver apparatus. The receiver apparatus returns response data to the sender apparatus which indicate whether the reliability of the receiver apparatus is equal to the specified value or higher.

When the reliability of the receiver apparatus is less than the specified value, the receiver apparatus may fail to return the response data to the sender apparatus.

In the case where the response data indicate that the reliability of the receiver apparatus is less than the specified value, the sender apparatus avoids the transmission of contents information to the receiver apparatus.

### Ninth Embodiment

A ninth embodiment of this invention is similar to one of the first to eighth embodiments thereof except for design changes mentioned later. In the ninth embodiment of this invention, the sender apparatus does not transmit the challenge data to the receiver apparatus. The receiver apparatus automatically transmits data representative of the copyright protection level "k" (the reliability) of the receiver apparatus to the sender apparatus.

### Tenth Embodiment

A tenth embodiment of this invention is similar to one of the first to ninth embodiments thereof except for design changes mentioned later. The tenth embodiment of this invention include first and second computer systems forming the sender apparatus and the receiver apparatus respectively. A control program for the first computer system (the sender apparatus) is stored in a first recording medium. The first computer system (the sender apparatus) refers to the control program in the first recording medium, and operates in accordance with the present control program. A control program for the second computer system (the receiver apparatus) is stored in a second recording medium. The second computer system (the receiver apparatus) refers to the control program in the second recording medium, and operates in accordance with the present control program.

### Eleventh Embodiment

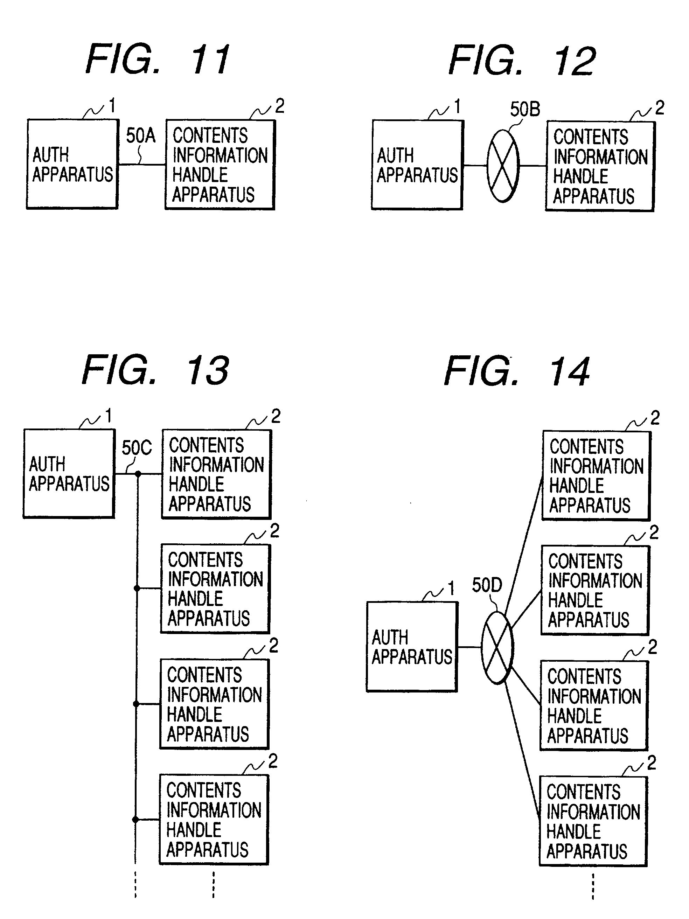

Fig. 11 shows a contents-information transmission system according to an eleventh embodiment of this invention. The system of Fig. 11 includes an authentication apparatus 1 and a contents-information handling apparatus 2 which are connected to each other via a transmission medium 50A. The authentication apparatus 1 includes the sender apparatus in one of the first to tenth embodiments of this invention. The contents-information handling apparatus 2 includes the receiver apparatus in one of the first to tenth embodiments of this invention. The transmission medium 50A includes a transmission line of an IEEE1394 type.

### Twelfth Embodiment

Fig. 12 shows a contents-information transmission system according to a twelfth embodiment of this invention. The system of Fig. 12 includes an authentication apparatus 1 and a contents-information handling apparatus 2 which are connected to each other via a transmission medium 50B. The authentication apparatus 1 includes the sender apparatus in one of the first to tenth embodiments of this invention. The contents-information handling apparatus 2 includes the receiver apparatus in one of the first to tenth embodiments of this invention. The transmission medium 50B includes a communication network such as the Internet.

### Thirteenth Embodiment

Fig. 13 shows a contents-information transmission system according to a thirteenth embodiment of this invention. The system of Fig. 13 includes an authentication apparatus 1 and a plurality of contents-information handling apparatuses 2. The authentication apparatus 1 is connected to the contents-information handling apparatuses 2 via a transmission medium 50C. The authentication apparatus 1 includes the sender apparatus in one of the first to tenth embodiments of this invention. Each of the contents-information handling apparatuses 2 includes the receiver apparatus in one of the first to tenth embodiments of this invention. The transmission medium 50C includes transmission lines of the IEEE1394 type.

### Fourteenth Embodiment

Fig. 14 shows a contents-information transmission system according to a fourteenth embodiment of this invention. The system of Fig. 14 includes an authentication apparatus 1 and a plurality of contents-information handling apparatuses 2. The authentication apparatus 1 is connected to the contents-information handling apparatuses 2 via a transmission medium 50D. The authentication apparatus 1 includes the sender apparatus in one of the first to tenth embodiments of this invention. Each of the contents-information handling apparatuses 2 includes the receiver apparatus in one of the first to tenth embodiments of this invention. The transmission medium 50D includes a communication network such as the Internet.

## Claims

1. A contents-information transmission system comprising:
a contents-information handling apparatus to which one of different levels of at least one of copyright protection and information secrecy is assigned;
an authentication apparatus;
means for transmitting said one of the different levels from the contents-information handling apparatus to the authentication apparatus;
means provided in the authentication apparatus for comparing said transmitted one of the different levels with a predetermined reference level; and
means for selectively permitting and inhibiting transmission of contents information from the authentication apparatus to the contents-information handling apparatus in response to a result of said comparing.

2. An authentication apparatus connectable with a contents-information handling apparatus to which one of different levels of at least one of copyright protection and information secrecy is assigned, the authentication apparatus comprising:
means for receiving said one of the different levels from the contents-information handling apparatus;
means for comparing said received one of the different levels with a predetermined reference level; and
means for selectively permitting and inhibiting transmission of contents information to the contents-information handling apparatus in response to a result of said comparing.

3. An authentication apparatus as recited in claim 2, wherein said one of the different levels is represented by copyrighted data.

4. In a contents-information transmission system comprising a contents-information handling apparatus to which one of different levels of at least one of copyright protection and information secrecy is assigned, and an authentication apparatus connectable with the contents-information handling apparatus, the authentication apparatus deciding a level of the contents-information handling apparatus which relates to at least one of copyright protection and information secrecy, the authentication apparatus selectively permitting and inhibiting transmission of contents information to the contents-information handling apparatus in response to said decided level; the contents-information handling apparatus comprising:
means for storing data representative of said one of the different levels; and
means for transmitting the data representative of said one of the different levels to the authentication apparatus.

5. A contents-information handling apparatus as recited in claim 4, wherein said data comprise copyrighted data.

6. A method of data transmission between an authentication apparatus and a contents-information handling apparatus to which one of different levels of at least one of copyright protection and information secrecy is assigned, the method comprising the steps of:
transmitting said one of the different levels from the contents-information handling apparatus to the authentication apparatus;
comparing said transmitted one of the different levels with a predetermined reference level; and
selectively permitting and inhibiting transmission of contents information from the authentication apparatus to the contents-information handling apparatus in response to a result of said comparing.

7. A method as recited in claim 6, wherein said one of the different levels is represented by copyrighted data.

8. A method as recited in claim 6, further comprising the steps of:
transmitting predetermined data from the authentication apparatus to the contents-information handling apparatus; and
transmitting said one of the different levels from the contents-information handling apparatus to the authentication apparatus in response to the predetermined data received by the contents-information handling apparatus.

9. In a contents-information transmission system comprising a contents-information handling apparatus to which one of different levels of at least one of copyright protection and information secrecy is assigned, and an authentication apparatus deciding a level of the contents-information handling apparatus which relates to at least one of copyright protection and information secrecy, the authentication apparatus selectively permitting and inhibiting transmission of contents information to the contents-information handling apparatus in response to said decided level; a transmission medium comprising:
means for connecting the contents-information handling apparatus and the authentication apparatus with each other;
means for enabling said one of the different levels to be transmitted from the contents-information handling apparatus to the authentication apparatus; and
means for enabling the contents information to be transmitted from the authentication apparatus to the contents-information handling apparatus.

10. A contents-information transmission system comprising:
a contents-information handling apparatus having a capability regarding at least one of copyright protection and information secrecy;
an authentication apparatus;
means for transmitting data representative of said capability from the contents-information handling apparatus to the authentication apparatus, the data containing first contents information which is copyrighted;
means provided in the authentication apparatus for judging the data transmitted from the contents-information handling apparatus; and
means for selectively permitting and inhibiting transmission of second contents information from the authentication apparatus to the contents-information handling apparatus in response to a result of said judging.

11. An authentication apparatus connectable with a contents-information handling apparatus having a capability regarding at least one of copyright protection and information secrecy, the authentication apparatus comprising:
means for receiving data representative of said capability from the contents-information handling apparatus, the data containing first contents information which is copyrighted;
means for judging the received data; and
means for selectively permitting and inhibiting transmission of second contents information to the contents-information handling apparatus in response to a result of said judging.

12. In a contents-information transmission system comprising a contents-information handling apparatus having a capability regarding at least one of copyright protection and information secrecy, and an authentication apparatus connectable with the contents-information handling apparatus, the authentication apparatus deciding whether or not the contents-information handling apparatus has a capability regarding at least one of copyright protection and information secrecy, the authentication apparatus selectively permitting and inhibiting transmission of first contents information to the contents-information handling apparatus in response to a result of said deciding; the contents-information handling apparatus comprising:
means for storing data representative of said capability of the contents-information handling apparatus, the data containing second contents information which is copyrighted; and
means for transmitting the data to the authentication apparatus.

13. A method of data transmission between an authentication apparatus and a contents-information handling apparatus having a capability regarding at least one of copyright protection and information secrecy, the method comprising the steps of:
transmitting data representative of said capability from the contents-information handling apparatus to the authentication apparatus, the data containing first contents information which is copyrighted;
judging the data transmitted from the contents-information handling apparatus; and
selectively permitting and inhibiting transmission of second contents information from the authentication apparatus to the contents-information handling apparatus in response to a result of said judging.

14. A method as recited in claim 13, further comprising the steps of:
transmitting predetermined data from the authentication apparatus to the contents-information handling apparatus; and
transmitting the data representative of the capability from the contents-information handling apparatus to the authentication apparatus in response to the predetermined data received by the contents-information handling apparatus.

15. In a contents-information transmission system comprising a contents-information handling apparatus having a capability regarding at least one of copyright protection and information secrecy, and an authentication apparatus deciding whether or not the contents-information handling apparatus has a capability regarding at least one of copyright protection and information secrecy, the authentication apparatus selectively permitting and inhibiting transmission of first contents information to the contents-information handling apparatus in response to a result of said deciding; a transmission medium comprising:
means for connecting the contents-information handling apparatus and the authentication apparatus with each other;
means for enabling data representative of the capability of the contents-information handling apparatus to be transmitted to the authentication apparatus, the data containing second contents information which is copyrighted; and
means for enabling the first contents information to be transmitted from the authentication apparatus to the contents-information handling apparatus.

16. A reliability deciding apparatus for deciding a reliability of an object apparatus to which one of different reliabilities regarding information secrecy is assigned, the reliability deciding apparatus comprising:
means for transmitting predetermined data to the object apparatus;
means for receiving response data from the object apparatus as a reply to the transmission of the predetermined data;
means for storing information representing a plurality of public keys corresponding to the different reliabilities respectively;
means for selecting one from among the public keys and decrypting the response data into a decryption-resultant data in accordance with the selected public key;
means for deciding whether or not the predetermined data and the decryption-resultant data are equal to each other; and
means for, when it is decided that the predetermined data and the decryption-resultant data are equal to each other, deciding that a reliability of the object apparatus is equal to one of the different reliabilities which corresponds to the selected public key.

17. A reliability decided apparatus to which one of different reliabilities regarding information secrecy is assigned, wherein a reliability of the reliability decided apparatus is decided by a reliability deciding apparatus, the reliability decided apparatus comprising:
means for receiving predetermined data from the reliability deciding apparatus;
means for storing information of a secret key corresponding to specified one of the different reliabilities;
means for encrypting the predetermined data into encryption-resultant data in response to the secret key; and
means for transmitting the encryption-resultant data to the reliability deciding apparatus.

18. A reliability deciding apparatus for deciding a reliability of an object apparatus to which one of different reliabilities regarding information secrecy is assigned, the reliability deciding apparatus comprising:
means for transmitting predetermined data to the object apparatus;
means for receiving response data from the object apparatus as a reply to the transmission of the predetermined data, the response data containing a data piece peculiar to the object apparatus;
means for storing a plurality of reference data pieces corresponding to the different reliabilities respectively;
means for extracting the peculiar data piece from the response data;
means for selecting one from among the reference data pieces and deciding whether or not the selected reference data piece and the extracted peculiar data piece are equal to each other; and
means for, when it is decided that the selected reference data piece and the extracted peculiar data piece are equal to each other, deciding that a reliability of the object apparatus is equal to one of the different reliabilities which corresponds to the selected reference data piece.

19. A reliability decided apparatus to which one of different reliabilities regarding information secrecy is assigned, wherein a reliability of the reliability decided apparatus is decided by a reliability deciding apparatus, the reliability decided apparatus comprising:
means for receiving predetermined data from the reliability deciding apparatus;
means for storing a data piece which is peculiar to the reliability decided apparatus, and which corresponds to specified one of the different reliabilities;
means for encrypting the predetermined data into encryption-resultant data in response to the data piece; and
means for transmitting the encryption-resultant data to the reliability deciding apparatus.

20. A reliability deciding apparatus for deciding a reliability of an object apparatus to which one of different reliabilities regarding information secrecy is assigned, the reliability deciding apparatus comprising:
means for transmitting predetermined data to the object apparatus;
means for receiving response data from the object apparatus as a reply to the transmission of the predetermined data, the response data containing a data piece peculiar to the object apparatus;
means for decrypting the response data into decryption-resultant data;
means for extracting the peculiar data piece from the decryption-resultant data;
means for executing predetermined calculation between the extracted peculiar data piece and the predetermined data to generate a calculation-resultant data piece;
means for compressing the calculation-resultant data piece into a compression-resultant data piece according to a predetermined function;
means for storing a plurality of reference data pieces corresponding to the different reliabilities respectively;
means for processing the reference data pieces into respective processing-resultant data pieces according to the predetermined function;
means for selecting one from among the processing-resultant data pieces and deciding whether or not the selected processing-resultant data piece and the compression-resultant data piece are equal to each other; and
means for, when it is decided that the selected processing-resultant data piece and the compression-resultant data piece are equal to each other, deciding that a reliability of the object apparatus is equal to one of the different reliabilities which corresponds to the selected processing-resultant data piece.

21. A reliability decided apparatus to which one of different reliabilities regarding information secrecy is assigned, wherein a reliability of the reliability decided apparatus is decided by a reliability deciding apparatus, the reliability decided apparatus comprising:
means for receiving predetermined data from the reliability deciding apparatus;
means for storing a peculiar data piece which is peculiar to the reliability decided apparatus, and which corresponds to specified one of the different reliabilities;
means for encrypting the predetermined data into encryption-resultant data in response to the peculiar data piece;
means for compressing the peculiar data piece into a compression-resultant data piece according to a predetermined function;
means for combining the encryption-resultant data and the compression-resultant data piece into response data; and
means for transmitting the response data to the reliability deciding apparatus.

22. A recording medium storing a computer program for controlling an authentication apparatus connectable with a contents-information handling apparatus to which one of different levels of at least one of copyright protection and information secrecy is assigned, the computer program comprising the steps of receiving said one of the different levels from the contents-information handling apparatus; comparing said received one of the different levels with a predetermined reference level; and selectively permitting and inhibiting transmission of contents information to the contents-information handling apparatus in response to a result of said comparing.

23. In a contents-information transmission system comprising a contents-information handling apparatus to which one of different levels of at least one of copyright protection and information secrecy is assigned, and an authentication apparatus connectable with the contents-information handling apparatus, the authentication apparatus deciding a level of the contents-information handling apparatus which relates to at least one of copyright protection and information secrecy, the authentication apparatus selectively permitting and inhibiting transmission of contents information to the contents-information handling apparatus in response to said decided level; a recording medium storing a computer program for controlling the contents-information handling apparatus, the computer program comprising the step of transmitting data representative of said one of the different levels to the authentication apparatus.

24. A recording medium storing a computer program for controlling an authentication apparatus connectable with a contents-information handling apparatus having a capability regarding at least one of copyright protection and information secrecy, the computer program comprising the steps of receiving data representative of said capability from the contents-information handling apparatus, the data containing first contents information which is copyrighted; judging the received data; and selectively permitting and inhibiting transmission of second contents information to the contents-information handling apparatus in response to a result of said judging.

25. In a contents-information transmission system comprising a contents-information handling apparatus having a capability regarding at least one of copyright protection and information secrecy, and an authentication apparatus connectable with the contents-information handling apparatus, the authentication apparatus deciding whether or not the contents-information handling apparatus has a capability regarding at least one of copyright protection and information secrecy, the authentication apparatus selectively permitting and inhibiting transmission of first contents information to the contents-information handling apparatus in response to a result of said deciding; a recording medium storing a computer program for controlling the contents-information handling apparatus, the computer program comprising the step of transmitting data representative of said capability of the contents-information handling apparatus to the authentication apparatus, the data containing second contents information which is copyrighted.
